# FASCICULE DE BREVET EUROPEEN

(11) **EP 0 420 776 B1**
(45) Date de publication et mention de la délivrance du brevet: **16.03.1994**
(21) Numéro de dépôt: 90470049.9
(22) Date de dépôt: 13.09.1990
(51) Int. Cl.: C21C 5/56, F27D 13/00

(54) **Procédé et dispositif pour le chargement de matériaux dans un four, et le préchauffage de ceux-ci**
Verfahren und Vorrichtung zum Beschicken eines Ofens mit Stoffen und zum Vorwärmen derselben
Process and installation for charging of a furnace with materials and preheating of the same

(30) Priorité: 28.09.1989 FR 8913047
(43) Date de publication de la demande: 03.04.1991
(73) Titulaire: UNIMETAL Société Française des Aciers Longs, F-57000 Metz (FR)
(72) Inventeur: Hamy, Michel, F-67000 Strasbourg (FR); Thebault, Jean-Michel, F-59300 Valenciennes (FR); Michelet, Jacques, F-57070 Longeville-Lès-Metz (FR); Lebrun, Christian, F-59300 Valenciennes (FR); Maurer, Ghislain, F-57160-Chatel Saint Germain (FR); Roth, Jean-Luc, F-57000 Metz (FR)
(74) Mandataire: Ventavoli, Roger

(56) Documents cités:
- EP-A- 0 161 950
- DE-A- 2 747 499
- FR-A- 2 328 046
- GB-A- 517 873
- US-A- 3 667 747

## Description

### PROCEDE ET DISPOSITIF POUR LE CHARGEMENT DE MATERIAUX DANS UN FOUR, ET LE PRECHAUFFAGE DE CEUX-CI

La présente invention concerne le chargement de matériaux métallifères solides en vrac, par exemple de ferrailles, dans un four métallurgique, tel qu'un four à arc, et le préchauffage de ces matériaux.

On sait que les fumées provoquées par la fusion des matériaux chargés peuvent être utilisées pour préchauffer les matériaux avant leur introduction dans le four. Il est en particulier connu, dans le cas de four à arcs, d'introduire dans le four une première charge de ferrailles, puis de commencer la fusion de celles-ci, les fumées chaudes en résultant étant captées et dirigées pour circuler à travers les ferrailles d'une deuxième charge et ainsi les préchauffer. Cette deuxième charge peut être ensuite introduite dans le four soit globalement après que les premières ferrailles soient fondues, soit en continu au fur et à mesure de la fusion.

L'intérêt de ce procédé est notamment d'économiser de l'énergie en récupérant partiellement la chaleur des fumées, et en évitant l'ouverture de la voûte du four, qui conduit à une perte d'énergie, pour l'introduction de la deuxième charge.

Pour mettre en oeuvre ce type de procédé, on connaît, par exemple par le document FR 2 328 046, des dispositifs de chargement constitués par un tube incliné par rapport à l'horizontale, débouchant par sa partie inférieure au-dessus du four et entraîné en rotation sur son axe. La charge est introduite à la partie supérieure du tube et, du fait de sa rotation et de son inclinaison, descend progressivement dans celui-ci. Pendant ce temps des gaz chauds circulent en sens inverse dans le tube et réchauffent les matériaux. Toutefois du fait que les matériaux restent par gravité au contact de la paroi du tube dans sa partie inférieure, le rendement des échanges thermiques directs gaz-matériaux est faible.

Dans le dispositif décrit dans le document GB-A-517 873, les matériaux sont répartis sur une plaque inclinée en direction du four et un brûleur situé à une extrémité est utilisé pour chauffer ces matériaux par le dessus.

Le document DE-A-2 747 499 décrit un four tunnel dans lequel les matériaux sont répartis sur un support disposé longitudinalement dans le four, et chauffés progressivement par le dessus, lors de leur déplacement sur ce support, par des brûleurs répartis longitudinalement dans la voûte du four.

Ces dispositifs présentent les mêmes inconvénients que ci-dessus sur le plan du rendement des échanges thermiques.

Selon un autre procédé connu, la charge est globalement maintenue au-dessus du four et traversée par les gaz, ou fumées, chauds. Il est cependant difficile dans ce cas de faire passer la totalité des fumées au travers de la charge et de réchauffer celle-ci uniformément. Les moyens de soutien et la quantité importante de matériaux ainsi globalement rassemblés créent une perte de charge dans l'évacuation des fumées, préjudiciable au bon fonctionnement du four. De plus, cette solution rend pratiquement impossible une introduction progressive des matériaux de la charge dans le four.

La présente invention a pour but de remédier à ces différents inconvénients et de permettre un chargement, notamment en continu, des matériaux préchauffés, en récupérant au maximum l'énergie thermique des fumées.

Avec cet objectif en vue, l'invention a pour objet un procédé de chargement de matériaux métallifères solides en vrac dans un four métallurgique tel qu'un four à arc, selon lequel on charge dans le four au moins une partie desdits matériaux par un tube, dont une extrémité débouche au-dessus du four et à l'autre extrémité duquel on introduit lesdits matériaux, et on conduit des gaz chauds à traverser ces matériaux avant leur introduction dans le four pour les préchauffer. Selon l'invention ce procédé est caractérisé en ce que on répartit les matériaux à charger en les faisant se déplacer sur des support disposés dans le tube selon un plan orienté selon une section transversale non droite du tube et incliné vers le bas en direction du four, de manière que les matériaux se répartissent sur lesdits supports en couche occupant sensiblement entièrement ladite section, et pour préchauffer lesdits matériaux on fait circuler lesdits gaz chauds dans le tube en les faisant passer dans des intervalles ménagés à cet effet entre les supports.

Ainsi qu'on l'aura sans doute déjà compris, le principe de l'invention consiste à répartir les matériaux dans le tube de chargement en une couche d'épaisseur sensiblement régulière, de manière à ce que les échanges thermiques avec les gaz chauds soient facilités et à obliger la totalité des gaz chauds à traverser la charge de matériaux en disposant ces matériaux selon une section non droite du tube c'est-à-dire de manière à ce qu'ils soient répartis sur une surface plus grande que la section droite dudit tube. Selon une disposition particulière de l'invention, pour répartir les matériaux, on les fait se déplacer sur une pluralité de supports répartis selon la longueur du tube à des niveaux progressivement décroissants en direction du four, en faisant vibrer ces supports de manière que les matériaux situés sur un support se déversent progressivement sur le support situé immédiatement en aval en direction du four.

Dans cette disposition particulière, on obtient la répartition recherchée des matériaux en les étalant sur les supports et on limite les pertes de charge des gaz du fait des intervalles entre les supports. Une amélioration supplémentaire du rendement des échanges thermiques gaz chauds-matériaux résulte du fait que, lors de leur chute d'un support sur le suivant, c'est-à-dire au niveau desdits intervalles, les matériaux sont entièrement "enrobés" par les gaz en mouvement, ce qui n'est pas le cas lorsque, comme dans les systèmes connus, les matériaux restent au contact de la paroi du tube de chargement.

Selon une autre disposition particulière de l'invention, les gaz chauds sont constitués par les fumées créées dans le four lors de la fusion des matériaux qui y sont déjà introduits.

L'invention a aussi pour objet un dispositif pour le chargement, notamment en continu, de matériaux dans un four métallurgique, et le préchauffage de ces matériaux, du type comprenant un tube de chargement débouchant à une extrémité au-dessus du four et comportant à son autre extrémité un orifice d'introduction desdits matériaux dans le tube. Selon l'invention, ce dispositif est caractérisé en ce qu'il comporte des moyens de supports des matériaux disposés dans le tube selon un plan orienté selon une section transversale non droite du tube et incliné vers le bas en direction du four, et répartis sur sensiblement toute cette section, des moyens pour entraîner les matériaux sur ces moyens de support en direction du four, et des passages ménagés dans ou entre ces moyens de supports pour permettre la circulation de gaz chauds d'un bout à l'autre du tube.

Selon une disposition particulière, les moyens de support sont constitués par des éléments sensiblement plats disposés de manière similaire aux marches d'un escalier descendant vers le four, les passages pour les gaz chauds étant ménagés entre lesdits éléments plats.

Pour provoquer le mouvement des matériaux vers le four, le dispositif comporte préférentiellement des moyens de mise en vibration desdits éléments plats en forme de marche, qui peuvent être légèrement inclinés vers le four, de manière à faire chuter les matériaux de la marche sur laquelle ils se trouvent, sur la marche inférieure adjacente.

Il est précisé que l'expression chargement en continu couvre bien entendu tout mode de chargement selon lequel on n'introduit pas les matériaux constitutifs de la charge en une seule fois, et concerne par exemple un chargement par introductions successives, légèrement décalées dans le temps, de petites quantités de ces matériaux.

D'autres caractéristiques et avantages apparaîtront dans la description qui va être faite à titre d'exemple d'un procédé et d'un dispositif, conforme à l'invention, pour le préchauffage de ferrailles et le chargement en continu de celles-ci dans un four à arc à courant continu.

On se reportera aux dessins annexés dans lesquels :

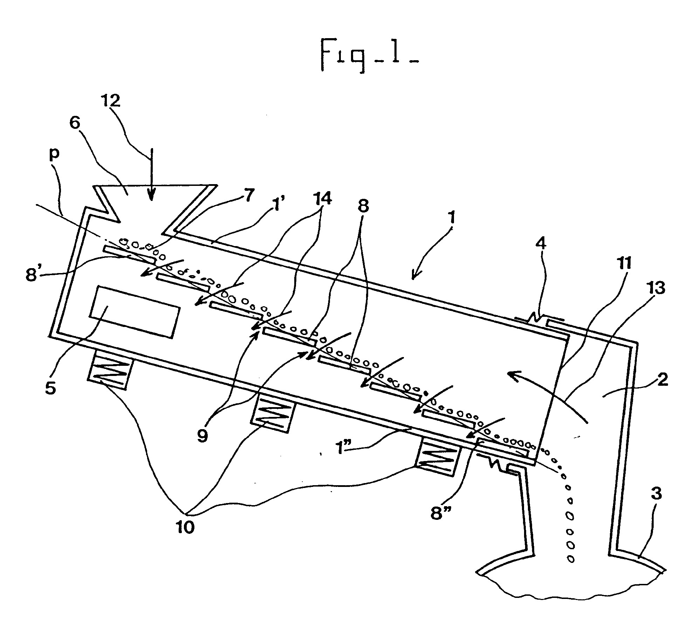

- la figure 1 représente schématiquement en coupe longitudinale le dispositif de chargement et la partie supérieure du four à arc ;
- la figure 2 est une vue schématique d'une variante de ce dispositif.

Le dispositif de chargement est constitué d'un tube ou tunnel tubulaire 1, de section préférentiellement rectangulaire. Ce tube est légèrement incliné par rapport à l'horizontale et débouche par son extrémité inférieure ouverte 11 au-dessus du four, non représenté, dans un conduit 2 lié à la voûte 3 du four. Des moyens d'étanchéité 4 sont prévus entre le tube 1 et le conduit 2. Vers son extrémité supérieure 12, le tube comporte un orifice 5 de sortie des fumées, et une trémie 6 d'alimentation en ferrailles 7 disposée au-dessus du tube 1.

La paroi du tube 1 est préférentiellement refroidie, par exemple par circulation d'eau, et/ou constituée ou revêtue intérieurement de matériau réfractaire, pouvant limiter les pertes thermiques.

A l'intérieur du tube, des platelages 8, refroidis ou en matériau réfractaire, sont disposés selon un plan P oblique en pente vers le four, de manière similaire aux marches d'un escalier et s'étendent transversalement sur sensiblement toute la largeur du tube. Le platelage 8' constituant la marche supérieure est situé sous la trémie 6, à proximité de la paroi supérieure 1' du tube. Le platelage 8'' constituant la marche inférieure est proche de la paroi inférieure 1'' du tube à l'extrémité inférieure 11 de celui-ci.

Les autres platelages 8, sont disposés régulièrement espacés entre le platelage supérieur 8' et le platelage inférieur 8'', formant ainsi un ensemble de platelages répartis sur toute une section oblique du tube selon le plan P, l'orifice 11 du tube 1 débouchant dans le four et l'orifice 5 de sortie des fumées étant situés de part et d'autre de ce plan P. Des espaces 9 sont ménagés entre deux platelages adjacents, aux endroits correspondant aux contremarches de l'escalier formé par l'ensemble des platelages.

Le tube 1 est pourvu de générateurs de vibrations 10 pour faire vibrer l'ensemble du tube et donc les platelages qui y sont rigidement liés. En variante les platelages 8 peuvent ne pas être rigidement fixés au tube 1, les générateurs de vibrations étant alors disposés de manière à n'agir que sur les platelages.

On va maintenant décrire une opération typique de chargement de ferrailles dans un four à arc au moyen du dispositif précédemment décrit.

Comme cela est bien connu, le chargement d'un four à arc s'effectue couramment en plusieurs fois. Lorsque le four est vide, une première charge, ou panier, de ferrailles est introduite dans le four, la voûte de celui-ci étant alors ouverte. Puis le four est refermé par remise en place de la voûte sur celui-ci et les électrodes sont alimentés en courant électrique et amenés au contact des ferrailles pour créer les arcs provoquant la fusion des ferrailles contenues dans le four. Lorsque les ferrailles de la première charge sont au moins partiellement fondues, on introduit dans le four les charges suivantes.

C'est alors que s'applique le procédé selon l'invention pour le chargement en continu des ferrailles.

Les ferrailles sont introduites dans le tube 1 par la trémie 6 selon la flèche 12. Elles se déposent sur le premier platelage 8'. Du fait des vibrations des platelages engendrés par les générateurs de vibrations 10, les ferrailles chutent sur le platelage suivant et ainsi de suite jusqu'à l'extrémité inférieure du tube d'où elles tombent dans le four. Simultanément, les fumées issues du four et captés par le conduit 2 circulent dans le tube 1 selon la flèche 13, à contre courant du déplacement des ferrailles, et en sortent par l'orifice 5 qui peut être relié à un dispositif d'extraction des fumées. Ce faisant, les fumées chaudes sont obligées de passer par les espaces 9 ménagés entre les platelages 8, ainsi que représenté par les flèches 14, et échauffent les ferrailles situées sur chaque platelage en épaisseur relativement faible, ce qui favorise l'échange thermique fumées-ferrailles. L'épaisseur moyenne de la couche de ferrailles dépend notamment de la nature de celles-ci, des dimensions et de l'inclinaison du tube et des platelages, et de l'intensité des vibrations. Cette épaisseur doit être compatible avec les pertes de charge autorisées par l'extraction des fumées.

De plus, au niveau des espaces 9 les fumées chaudes enveloppent totalement les ferrailles qui chutent d'un platelage sur l'autre, l'échange thermique étant en conséquence encore amélioré à ces endroits.

Ainsi, les ferrailles arrivent dans le four en continu et préchauffées. De plus, grâce à la disposition des platelages dans le tube, pratiquement la totalité des fumées traversant le tube est amenée au contact des ferrailles ce qui permet de récupérer au maximum leur énergie thermique.

Grâce au procédé et au dispositif selon l'invention, on peut par exemple réaliser une économie d'énergie de 60 kWh par tonne de métal liquide par rapport à une utilisation de ferrailles non préchauffées.

De plus, les ferrailles étant déjà chaudes à leur introduction dans le four, le temps nécessaire à leur fusion est réduit, et la productivité de l'installation augmentée.

Le procédé selon l'invention est particulièrement bien adapté au chargement de fours à arcs à courant continu à au moins deux électrodes de voûte. En effet, dans ce cas, la chute de ferrailles préchauffées dans le four peut être dirigée en un point situé entre les électrodes de même polarité, c'est-à-dire, comme on le sait, au point où l'énergie des arcs électriques à tendance à se concentrer. Les ferrailles chutant en continu à cet endroit sont ainsi rapidement fondues, ce qui évite leur accumulation sous forme encore solide.

L'invention n'est pas limitée au dispositif et au procédé décrits ci-dessus à titre d'exemple. En particulier, la conception des platelages peut être modifiée, dans la mesure où celle-ci autorise le déplacement des ferrailles depuis la trémie jusqu'à l'extrémité de sortie du tube selon toute une section du tube, et où la totalité ou au moins une grande partie des gaz chauds ou fumées est conduite à traverser la couche de ferrailles ainsi constituée.

Par exemple le tube peut être sensiblement horizontal, et les différents platelages inclinés en direction du four, des moyens étant alors préférentiellement prévus pour assurer l'extraction des fumées par l'orifice de sortie 5, qui peut aussi être réalisée dans la paroi frontale du tube située à l'opposé de son extrémité de sortie 11.

On peut aussi répartir les matériaux selon plusieurs sections non droites du tube, en disposant par exemple un ou plusieurs ensembles de supports similaires aux supports 8 selon des plans sensiblement parallèles au plan P, et en adaptant le tube en conséquence (un orifice de chargement de matériaux par ensemble de support et un passage réservé en bas du ou des ensembles de supports les plus proches du four pour permettre le passage des matériaux provenant des ensembles de supports les plus éloignés du four.

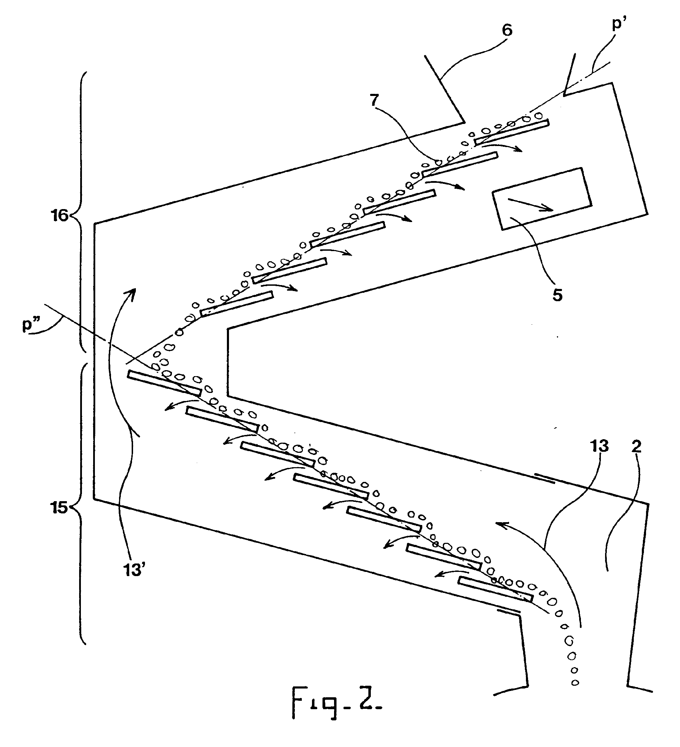

Ainsi que cela est représenté à la figure 2, les supports peuvent également être disposés non pas selon un seul plan P, mais selon plusieurs plan sécants P', P'', à la manière d'un escalier comportant plusieurs volées de marches alternativement dans un sens puis dans l'autre, chacune de ces volées de marches étant disposée dans une portion de tubes, et les différentes portions de tube étant reliées entre elles successivement.

Dans cette variante, non seulement l'encombrement latéral du dispositif de chargement peut être réduit, mais encore le rendement global des échanges thermiques est amélioré du fait que l'énergie thermique résiduelle des fumées 13' après le premier échange avec les ferrailles dans la zone inférieure 15 est réutilisée dans la zone supérieure 16.

Selon une autre variante encore, plusieurs dispositifs de chargement, tels que ceux qui viennent d'être décrits, peuvent être associés, "en parallèles", les tubes de chaque dispositif convergeant vers l'orifice de chargement du four.

## Revendications

1. Procédé de chargement de matériaux métallifères dans un four métallurgique tel qu'un four à arcs, selon lequel on charge dans le four au moins une partie desdits matériaux par un tube (1), dont une extrémité (11) débouche au-dessus du four et à l'autre extrémité duquel on introduit lesdits matériaux, et on conduit des gaz chauds à traverser ces matériaux avant leur introduction dans le four pour les préchauffer, caractérisé en ce que on répartit les matériaux (7) à charger en les faisant se déplacer sur des support disposés dans le tube selon un plan (P) orienté selon une section transversale non droite du tube et incliné vers le bas en direction du four, de manière que les matériaux se répartissent sur lesdits support en couche occupant sensiblement entièrement ladite section, et pour préchauffer lesdits matériaux on fait circuler lesdits gaz chauds (flèche 13) dans le tube en les faisant passer dans des intervalles (9) ménagés à cet effet entre les supports.

2. Procédé selon la revendication 1, caractérisé en ce que pour répartir les matériaux, on les fait se déplacer sur une pluralité de supports (8) répartis selon la longueur du tube à des niveaux progressivement décroissants en direction du four, en faisant vibrer ces supports de manière que les matériaux situés sur un support se déversent progressivement sur le support situé immédiatement en aval en direction du four.

3. Procédé selon l'une des revendications 1 et 2, caractérisé en ce que lesdits gaz chauds sont constitués par des fumées résultant de la fusion dans le four de matériaux préalablement introduits.

4. Dispositif pour le chargement en continu de matériaux dans un four métallurgique, et le préchauffage de ces matériaux, du type comprenant un tube de chargement (1) débouchant à une extrémité (11) au-dessus du four et comportant à son autre extrémité un orifice (6) d'introduction desdits matériaux dans le tube, dispositif caractérisé en ce qu'il comporte des moyens de supports (8) des matériaux (7) disposés dans le tube selon un plan (P) orienté selon une section transversale non droite du tube et incliné vers le bas en direction du four, et répartis sur sensiblement toute cette section, des moyens (10) pour entraîner les matériaux sur ces moyens de supports en direction du four, et des passages (9) ménagés dans ou entre ces moyens de supports pour permettre la circulation de gaz chauds (13) d'un bout à l'autre du tube.

5. Dispositif selon la revendication 4, caractérisé en ce que les moyens de supports sont constitués par des éléments sensiblement plats (8) disposés de manière similaire aux marches d'un escalier descendant vers le four, les passages (9) pour les gaz chauds étant ménagés entre lesdits éléments plats.

6. Dispositif selon l'une des revendications 4 et 5, caractérisé en ce que, pour entraîner le déplacement des matériaux (7) sur les supports (8), il comporte des moyens (10) de mise en vibration desdits supports.

7. Dispositif selon l'une des revendications 4 et 5, caractérisé en ce que lesdits supports (8) sont inclinés en direction du four.

8. Dispositif selon la revendication 4 ou 5, caractérisé en ce que le tube (1) comporte un orifice (5) de sortie des gaz chauds, cet orifice (5) de sortie et l'orifice d'extrémité (11) débouchant dans le four étant situés de part et d'autre de l'ensemble des supports 8 du matériau.

9. Dispositif selon la revendication 4 ou 5, caractérisé en ce que, le tube (1) comporte une trémie (6) de chargement des ferrailles située au-dessus du support de matériaux supérieur 8'.

## Patentansprüche

1. Verfahren zum Beschicken eines metallurgischen Schmelzofens, beispielsweise eines Lichtbogenofens, mit metallhaltigen Stoffen, wobei dem Ofen wenigstens ein Teil dieser Stoffe durch ein Rohr (1) zugeführt wird, dessen eines Ende (11) oberhalb des Ofens mündet und in dessen anderes Ende die Stoffe eingeführt werden und wobei heiße Gase zur Vorwärmung durch die Stoffe geleitet werden, bevor diese in den Ofen eingeführt werden, dadurch gekennzeichnet, daß die Beschickungsstoffe (7) verteilt werden, indem sie auf Halterungen versetzt angeordnet werden, welche im Rohr entlang einer Ebene (P) vorgesehen sind, die sich entlang eines schrägen Querschnitts des Rohrs erstreckt und in Richtung Ofen nach unten geneigt ist, so daß die Stoffe sich auf den Halterungen schichtweise verteilen und dabei im wesentlichen den Querschnitt vollständig bedecken und wobei zur Vorwärmung der Stoffe die heißen Gase (Pfeil 13) das Rohr durchströmen und dabei Lücken (9) durchsetzen, die zu diesem Zweck zwischen den Halterungen vorgesehen sind.

2. Verfahren nach Anspruch 1, dadurch gekennzeichnet, daß zur Verteilung der Stoffe diese auf einer Vielzahl von Halterungen (8) fortbewegt werden, die in Längsrichtung des Rohrs auf hintereinander in Richtung zum Ofen hin abnehmenden Höhen angeordnet sind und daß diese Halterungen derart in Vibrationen versetzt werden, daß die auf einer Halterung befindlichen Stoffe hintereinander auf die sich unmittelbar in Fließrichtung zum Ofen hin befindliche Halterung bewegen.

3. Verfahren nach einem der Ansprüche 1 und 2, dadurch gekennzeichnet, daß die heißen Gase aus den Abgasen bestehen, die beim Schmelzvorgang der zuvor in den Ofen eingeführten Stoffe entstehen.

4. Vorrichtung zur kontinuierlichen Beschickung eines metallurgischen Schmelzofens mit Stoffen und zur Vorwärmung dieser Stoffe mit einem Beschickungsrohr (1), dessen eines Ende (11) oberhalb des Ofens mündet und das an seinem anderen Ende eine Öffnung (6) zum Einfüllen der Stoffe in das Rohr aufweist, dadurch gekennzeichnet, daß sie eine Halterung (8) für die Stoffe (7) aufweist, die im Rohr entlang einer Ebene (P) angeordnet ist, welche sich entlang eines schrägen Querschnitts des Rohrs erstreckt und in Richtung Ofen nach unten geneigt ist sowie im wesentlichen über den gesamten Querschnitt verteilt ist, eine Anordnung (10) zum Vorschub der Stoffe auf der Halteanordnung in Richtung Ofen aufweist, sowie Durchlässe (9) aufweist, die in der Halteanordnung oder zwischen den Halterungen vorgesehen sind, um eine Strömung heißer Gase (13) von einem Ende des Rohrs zum anderen zu ermöglichen.

5. Vorrichtung nach Anspruch 4, dadurch gekennzeichnet, daß die Halteanordnung aus im wesentlichen ebenen Teilen (8) besteht, die ähnlich den Stufen einer in Richtung zum Ofen hin absteigenden Treppe angeordnet sind, wobei die Durchlässe (9) für die heißen Gase zwischen den ebenen Teilen vorgesehen sind.

6. Vorrichtung nach einem der Ansprüche 4 und 5, dadurch gekennzeichnet, daß zum Antrieb der Fortbewegung der Stoffe (7) auf den Halterungen (8) diese eine Anordnung (10) aufweist, um die Halterungen in Vibrationen zu versetzen.

7. Vorrichtung nach einem der Ansprüche 4 und 5, dadurch gekennzeichnet, daß die Halterungen (8) in Richtung zum Ofen hin geneigt sind.

8. Vorrichtung nach Anspruch 4 oder 5, dadurch gekennzeichnet, daß das Rohr (1) eine Auslaßöffnung (5) für die heißen Gase aufweist, wobei diese Auslaßöffnung (5) und die im Ofen mündende Endöffnung (11) beidseits der Anordnung aus Halterungen (8) für den Stoff vorgesehen sind.

9. Vorrichtung nach Anspruch 4 oder 5, dadurch gekennzeichnet, daß das Rohr (1) eine Schrotteinfüllöffnung (6) aufweist, die oberhalb der oberen Halterung (8') für den Stoff vorgesehen ist.

## Claims

1. Method for charging a metallurgical furnace, such as an arc furnace, with metal-containing materials, according to which the furnace is charged with at least part of the said materials via a tube (1), one end (11) of which emerges above the furnace and at the other end of which the said materials are introduced, and hot gases are caused to pass through these materials in order to preheat them before their introduction into the furnace, characterized in that the charge materials (7) are distributed by making them move over supports arranged in the tube in a plane (P) oriented in a non-right transverse section of the tube and inclined downwards towards the furnace, so that the materials are distributed over the said supports as a layer occupying the said section substantially entirely, and in order to preheat the said materials the said hot gases (arrow 13) are made to flow into the tube by making them pass into gaps (9) produced for this purpose between the supports.

2. Method according to Claim 1, characterized in that, in order to distribute the materials, they are made to move over a plurality of supports (8) distributed along the length of the tube at levels decreasing progressively towards the furnace, by making these supports vibrate so that the materials lying on one support are progressively tipped on to the support lying immediately downstream, towards the furnace.

3. Method according to one of Claims 1 and 2, characterized in that the said hot gases are constituted by smoke resulting from the melting in the furnace of materials introduced beforehand.

4. Device for the continuous charging of a metallurgical furnace with materials and for the preheating of these materials, of the type comprising a charging tube (1) emerging at one end (11) above the furnace and including at its other end an orifice (6) for introducing the said materials into the tube, which device is characterized in that it includes means (8) for supporting the materials (7), which means are arranged in the tube in a plane (P) oriented in a non-right transverse section of the tube and inclined downwards towards the furnace, and are distributed over substantially this entire section, means (10) for driving the materials over these support means towards the furnace and passages (9) produced in or between these support means in order to allow the flow of hot gases (13) from one end of the tube to the other.

5. Device according to Claim 4, characterized in that the support means are constituted by substantially flat elements (8) arranged in a manner similar to the steps of a flight of stairs going down towards the furnace, the passages (9) for the hot gases being produced between the said flat elements.

6. Device according to one of Claims 4 and 5, characterized in that, in order to give rise to the movement of the materials (7) over the supports (8), it includes means (10) for setting the said supports into vibration.

7. Device according to one of Claims 4 and 5, characterized in that the said supports (8) are inclined towards the furnace.

8. Device according to Claim 4 or 5, characterized in that the tube (1) includes an outlet orifice (5) for the hot gases, this outlet orifice (5) and the end orifice (11) emerging in the furnace lying on either side of the set of the supports (8) for the material.

9. Device according to Claim 4 or 5, characterized in that the tube (1) includes, above the upper materials support 8', a hopper (6) for charging with scrap iron.
